# FASCICULE DE BREVET EUROPEEN

(11) **EP 3 233 585 B1**
(45) Date de publication et mention de la délivrance du brevet: **06.02.2019**
(21) Numéro de dépôt: 15817988.7
(22) Date de dépôt: 10.12.2015
(51) Int. Cl.: B60R 22/24, B60N 2/36

(54) **SUPPORT D'ENROULEUR DE CEINTURE DE SÉCURITÉ ARRIÈRE D'UN VÉHICULE AUTOMOBILE**
GURTAUFROLLERHALTERUNG EINES SICHERHEITSGURTES HINTEN IN EINEM KRAFTFAHRZEUG
RETRACTOR SUPPORT OF A REAR SEAT BELT OF A MOTOR VEHICLE

(30) Priorité: 19.12.2014 FR 1462874
(43) Date de publication de la demande: 25.10.2017
(73) Titulaire: Renault S.A.S., 92100 Boulogne-Billancourt (FR)
(72) Inventeur: LEFEBVRE, Benjamin, 91470 Les Molieres (FR)
(86) Numéro de dépôt international: PCT/FR2015/053410
(87) Numéro de publication internationale: WO 2016/097540

(56) Documents cités:
- FR-A1- 2 862 034
- FR-A1- 2 993 216
- FR-A1- 2 995 849
- US-B1- 6 773 048

## Description

### Domaine de l'invention :

La présente invention concerne un support d'enrouleur de ceinture de sécurité arrière d'un véhicule automobile, ainsi qu'un véhicule équipé d'un tel support.

### Etat de la technique :

Les véhicules automobiles comportent généralement à chaque place des ceintures de sécurité disposant d'un enrouleur automatique équipé d'un ressort qui enroule la sangle quand elle est libérée, de boucles de passage de cette sangle pour guider son parcours, et d'un crochet s'engageant dans un verrou correspondant pour verrouiller cette ceinture sur le passager.

L'enrouleur automatique comporte des dispositifs bloquant automatiquement le déroulage de la sangle dans différents cas causés par un accident, comprenant notamment une traction très rapide sur la sangle, une très forte décélération du véhicule ou son inclinaison trop importante.

Un type de support connu recevant un enrouleur de ceinture de sécurité pour les places arrière du véhicule, d'après le préambule de la revendication 1, présenté notamment par le document FR-B1-2862034, comporte une tablette formée par une tôle disposée horizontalement, comprenant un pli latéral extérieur par rapport à l'axe longitudinal du véhicule, qui est soudé par points sur une tôle latérale de doublure de custode, et une partie arrière soudée aussi par points sur le montant arrière de la caisse qui encadre l'ouverture recevant le hayon. Cette zone d'un support d'enrouleur de ceinture de sécurité arrière est de plus en plus contrainte en terme d'architecture dans la mesure où elle doit accueillir d'autres types d'équipements tels qu'une commande de rabattage d'un siège ou dossier arrière du véhicule, ou encore un avertisseur sonore, ou des câblages, cette liste n'étant pas exhaustive. Les dispositifs connus ne permettent pas une intégration optimale et robuste de ces différents d'équipements.

### But de l'invention :

L'invention a pour but de pallier tout ou partie des inconvénients précédents en proposant un support d'enrouleur de ceinture de sécurité arrière d'un véhicule automobile qui assure différentes fonctions tout en étant d'une conception simple, robuste, d'un encombrement limité et économique.

### Objet de l'invention :

A cet effet, l'invention a pour objet un support d'enrouleur de ceinture de sécurité arrière d'un véhicule automobile, comprenant une tablette formée d'une tôle emboutie allongée suivant la direction longitudinale du véhicule, conformée pour être disposée dans ce véhicule, comportant une zone centrale sensiblement horizontale délimitée par un pli latéral extérieur prévu pour être fixé verticalement sur une tôle de doublure de custode de la caisse de ce véhicule, un pli latéral intérieur pourvu d'une zone de fixation arrière prévue pour être fixée sur un montant latéral arrière de cette caisse, la zone centrale comprenant des perçages de fixation de l'enrouleur conformés dans une partie avant de la tablette, caractérisé en ce que la tablette comporte une patte de fixation découpée dans une partie arrière de la zone centrale, et repliée vers le bas, cette patte de fixation étant destinée à assurer la fixation d'un organe de commande de rabattement d'un siège ou dossier arrière du véhicule.

Selon d'autres caractéristiques avantageuses de l'invention :
- la patte de fixation est repliée vers le bas de façon sensiblement perpendiculaire à la zone centrale de la tablette,
- la patte de fixation est découpée dans la zone centrale de la tablette suivant une ligne de coupe en U, l'ouverture du U étant dirigée vers l'intérieur de la caisse et définissant une ligne de pliage de la patte de fixation disposée de façon adjacente au pli latéral intérieur,
- la ligne de coupe en U et la ligne de pliage de la patte de fixation délimitent une ouverture () ayant une forme sensiblement rectangulaire permettant le passage de câblages dans le véhicule automobile,
- la zone centrale comporte une empreinte locale au milieu de laquelle sont situés les perçages de fixation de l'enrouleur,
- le pli latéral extérieur comporte une empreinte locale en vis-à-vis de la patte de fixation considérée suivant la direction transversale du véhicule, de façon à ménager un espace de passage augmenté entre la patte de fixation et le pli latéral extérieur,
- le support est réalisé dans une tôle emboutie ayant une épaisseur comprise entre 1,7 et 2 mm.

L'invention a encore pour objet un agencement de structure d'une caisse d'un véhicule automobile comprenant une caisse, une doublure de custode latérale du véhicule, un montant arrière attenant à une ouverture de coffre arrière du véhicule, caractérisé en ce qu'il comprend un support d'enrouleur ayant tout ou partie des caractéristiques précédentes.

L'invention a encore pour objet un véhicule automobile comprenant une rangée de sièges arrière, des enrouleurs de ceinture de sécurité associés respectivement aux sièges, au moins un organe de commande de rabattage d'un siège ou dossier de siège arrière du véhicule, caractérisé en ce qu'il comprend un agencement de structure ayant les caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective de la partie arrière droite d'une caisse d'un véhicule automobile comprenant un agencement de structure équipé d'un support d'enrouleur de sécurité selon l'invention, cette vue étant considérée depuis l'intérieur de la caisse du véhicule,
- les figures 2, 3, 5 représentent des vues en perspective d'un support d'enrouleur de ceinture de sécurité selon l'invention, équipant le côté droit de la caisse du véhicule, et
- la figure 4 est une vue en perspective d'un support d'enrouleur de ceinture de sécurité selon l'invention, équipant le côté gauche de la caisse du véhicule.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Les notions avant-arrière s'entendent par rapport au sens de marche normal du véhicule qui est dirigé vers l'avant.
Les notions « intérieur » et « extérieur » s'entendent par rapport au centre du véhicule. Un élément situé du côté intérieur est tournée vers le centre du véhicule, c'est-à-dire vers le plan médian vertical longitudinal du véhicule, tandis qu'un élément situé du côté extérieur est tourné vers le côté latéral adjacent du véhicule. Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admise dans le cadre de l'invention.

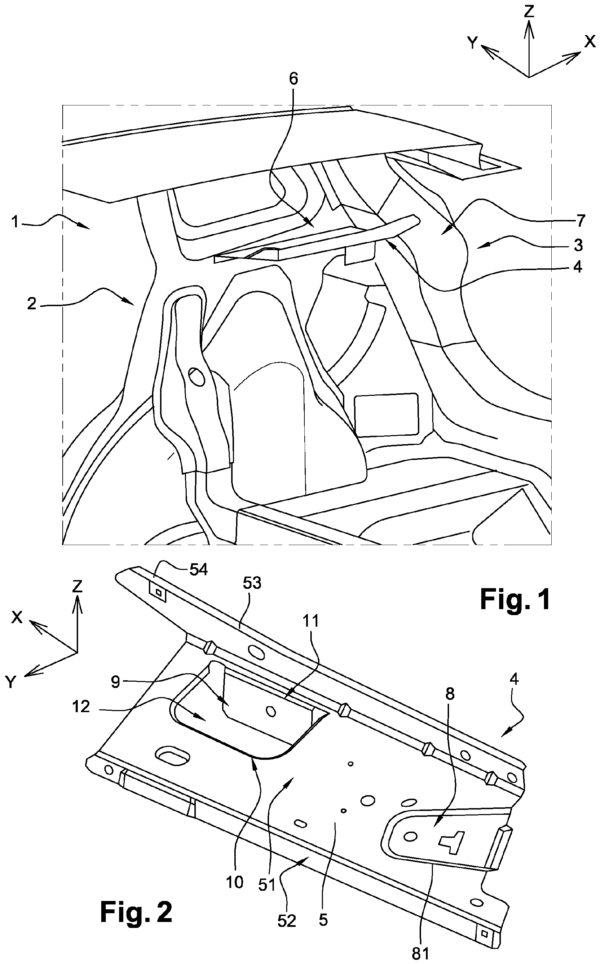

On a représenté à la figure 1 une vue en perspective intérieure d'une partie arrière 1 de la caisse d'un véhicule, localisée à la zone de custode et au passage de roue, cette partie arrière 1 étant équipée d'un support d'enrouleur de ceinture de sécurité selon l'invention. La vue représentée ici est située du côté droit du véhicule étant entendu que la zone située du côté gauche est symétrique et également pourvue d'un support d'enrouleur conforme à l'invention. La zone de custode est située entre une ouverture latérale arrière 2 et une ouverture de coffre ou de hayon arrière 3 du véhicule (les ouvrants n'étant ici pas représentés). On appelle classiquement « caisse du véhicule » les éléments de structure du véhicule (doublure, carrosserie, renforts) issus des phases de ferrage (schématiquement découpage, emboutissage, soudage), ces éléments étant situés au-dessus du soubassement du véhicule.
La partie arrière 1 de la caisse du véhicule comprend un agencement selon l'invention de chaque côté du véhicule. Cet agencement comporte un support d'enrouleur 4 de ceinture de sécurité arrière. Les ceintures de sécurité arrière concernées sont prévues pour les passagers arrière latéraux du véhicule, c'est-à-dire les passagers attenants aux ouvrants latéraux gauche et droit du véhicule. Les ceintures de sécurité et leur enrouleur ne sont pas représentés sur les figures. Comme illustré aux figures 2 à 4, le support d'enrouleur 4 selon l'invention comprend une tablette 5 formée d'une tôle emboutie allongée qui s'étend suivant la direction longitudinale X du véhicule. La tablette 5 est conformée pour être disposée dans la caisse du véhicule. La tablette 5 comporte une zone centrale 51 sensiblement horizontale délimitée d'une part par un pli latéral extérieur 52 prévu pour être fixé verticalement sur une tôle de doublure de custode 6 de la caisse de ce véhicule et d'autre part par un pli latéral intérieur 53 pourvu d'une zone de fixation arrière 54 prévue pour être fixée sur un montant latéral arrière 7 de cette caisse (figure 1). La zone centrale 51 comprend des perçages 8 de fixation de l'enrouleur conformés dans une partie avant de la tablette 5. Selon un aspect essentiel de l'invention, la tablette 5 comporte une patte de fixation 9 découpée dans une partie arrière de la zone centrale 51. La patte de fixation est repliée vers le bas. Elle est destinée à assurer la fixation d'un organe de commande (non représenté) de rabattement d'un siège ou dossier de siège arrière du véhicule. Un ou plusieurs perçages ou tout autre moyen d'accrochage équivalent peuvent être prévus dans la patte de fixation 9 pour assurer la fixation de l'organe de commande. Le support d'enrouleur 4 assure de ce fait une autre fonction qui est de constituer un support pour un organe de commande. Cet organe de commande peut typiquement être activé depuis l'ouverture de coffre arrière 3 du véhicule.
La patte de fixation 9 est repliée vers le bas de façon sensiblement perpendiculaire à la zone centrale 51 de la tablette 5.

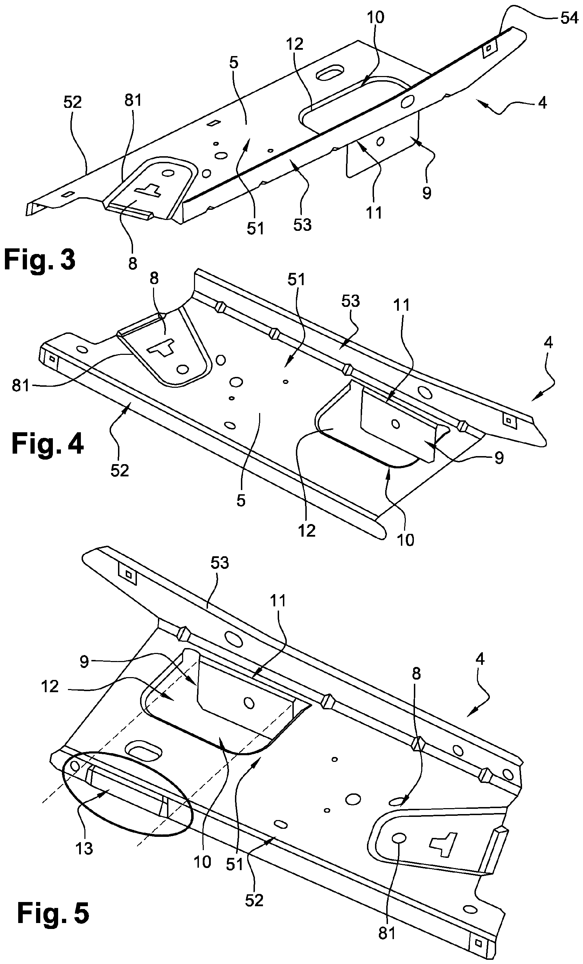

La patte de fixation 9 est découpée dans la zone centrale 51 de la tablette 5 suivant une ligne de coupe 10 en U. L'ouverture du U est dirigée vers l'intérieur de la caisse. La ligne de coupe 10 définit une ligne de pliage 11 de la patte de fixation 9 disposée de façon adjacente au pli latéral intérieur 53. La ligne de pliage 11 est de ce fait opposé et sensiblement parallèle à la branche centrale du U formé par la ligne de coupe 10.
La ligne de coupe 10 en U et la ligne de pliage 11 de la patte de fixation 9 délimitent une ouverture 12 ayant une forme sensiblement rectangulaire, aux angles arrondis entre la branche centrale et les branches latérales du U formé par la ligne de coupe 10. L'ouverture 12 permet le passage et/ou l'agrafage de câblages (non représentés) dans le véhicule automobile. Le support d'enrouleur 4 assure de ce fait encore une autre fonction qui est de permettre le passage et/ou l'agrafage de câblages dans la caisse du véhicule.
En référence aux figures 2 à 5, la zone centrale 51 comporte une empreinte locale 81 au milieu de laquelle sont situés les perçages 8 de fixation de l'enrouleur. Cette empreinte locale réalisée par emboutissage décale légèrement (de 1 à 3 mm suivant la direction verticale) les plans de la zone d'accrochage du support d'enrouleur par rapport au plan de la zone centrale de la tablette 5. Ce décalage est conformé pour rigidifier localement la tablette 5 dans une zone d'accrochage du support d'enrouleur qui doit résister à des efforts et sollicitations importantes pour retenir la ceinture de sécurité dans toutes les situations.
Comme cela est visible à la figure 5, le pli latéral extérieur 52 comporte une empreinte locale 13 en vis-à-vis de la patte de fixation 9 considérée suivant la direction transversale Y du véhicule. Cette empreinte locale 13 est réalisée par emboutissage et vise à écarter localement le pli intérieur 52 de la patte de fixation 9 (écartement suivant la direction transversale Y), sur une longueur suivant la direction longitudinale X qui correspondant sensiblement à la longueur de la ligne de pliage 11. Cette empreinte locale 13 est conformée de façon à ménager un espace suffisant pour assurer le passage ou l'accès d'une pince à souder (non représentée) afin de réaliser les points de soudure pour la fixation du support d'enrouleur 4 sur la structure de caisse du véhicule.

Le support d'enrouleur 4 selon l'invention est typiquement réalisé dans une tôle emboutie ayant une épaisseur comprise entre 1,7 et 2 mm.
Le support d'enrouleur 4 suivant l'invention peut également assurer la fonction de support pour d'autres équipements, en particulier un avertisseur sonore (non représenté, également appelé « buzzer » selon la terminologie anglais) associé au radar de recul qui peut être fixé sur la zone centrale 51. Des perçages correspondants peuvent être prévus dans la zone centrale 51 de la tablette 5 pour la fixation de ces équipements.

Bien entendu, l'invention n'est pas limitée aux modes ou variantes de réalisation décrits précédemment et comprends tous les équivalents techniques de ces moyens.

## Revendications

1. Support d'enrouleur (4) de ceinture de sécurité arrière d'un véhicule automobile, comprenant une tablette (5) formée d'une tôle emboutie allongée suivant la direction longitudinale (X) du véhicule, conformée pour être disposée dans ce véhicule, comportant une zone centrale (51) sensiblement horizontale délimitée par un pli latéral extérieur (52) prévu pour être fixé verticalement sur une tôle de doublure de custode (6) de la caisse de ce véhicule, un pli latéral intérieur (53) pourvu d'une zone de fixation arrière (54) prévue pour être fixée sur un montant latéral arrière (7) de cette caisse, la zone centrale (51) comprenant des perçages (8) de fixation de l'enrouleur conformés dans une partie avant de la tablette (5), **caractérisé en ce que** la tablette (5) comporte une patte de fixation (9) découpée dans une partie arrière de la zone centrale (51), et repliée vers le bas, cette patte de fixation (9) étant destinée à assurer la fixation d'un organe de commande de rabattement d'un siège ou dossier arrière du véhicule.

2. Support d'enrouleur (4) selon la revendication 1, **caractérisé en ce que** la patte de fixation (9) est repliée vers le bas de façon sensiblement perpendiculaire à la zone centrale (51) de la tablette (5).

3. Support d'enrouleur (4) selon la revendication 1 ou 2, **caractérisé en ce que** la patte de fixation (9) est découpée dans la zone centrale (51) de la tablette (5) suivant une ligne de coupe (10) en U, l'ouverture du U étant dirigée vers l'intérieur de la caisse et définissant une ligne de pliage (11) de la patte de fixation (9) disposée de façon adjacente au pli latéral intérieur (53).

4. Support d'enrouleur (4) selon la revendication 3, **caractérisé en ce que** la ligne de coupe (10) en U et la ligne de pliage (11) de la patte de fixation (9) délimitent une ouverture (12) ayant une forme sensiblement rectangulaire permettant le passage et/ou l'agrafage de câblages dans le véhicule automobile.

5. Support d'enrouleur (4) selon l'une quelconque des revendications précédentes, **caractérisé en ce que** la zone centrale (51) comporte une empreinte locale (81) au milieu de laquelle sont situés les perçages (8) de fixation de l'enrouleur.

6. Support d'enrouleur (4) selon l'une quelconque des revendications précédentes, **caractérisé en ce que** le pli latéral extérieur (52) comporte une empreinte locale (13) en vis-à-vis de la patte de fixation (9) considérée suivant la direction transversale (Y) du véhicule, de façon à ménager un espace de passage augmenté entre la patte de fixation (9) et le pli latéral extérieur (52).

7. Support d'enrouleur (4) selon l'une quelconque des revendications précédentes, **caractérisé en ce qu'**il est réalisé dans une tôle emboutie ayant une épaisseur comprise entre 1,7 et 2 mm.

8. Agencement de structure d'une caisse d'un véhicule automobile comprenant une doublure de custode (6) latérale du véhicule, un montant arrière (7) attenant à une ouverture de coffre arrière (3) du véhicule, **caractérisé en ce qu'**il comprend un support d'enrouleur (4) selon l'une quelconque des revendications précédentes.

9. Véhicule automobile comprenant une rangée de sièges arrière, des enrouleurs de ceinture de sécurité associés respectivement aux sièges, au moins un organe de commande de rabattage d'un siège ou dossier de siège arrière du véhicule, **caractérisé en ce qu'**il comprend un agencement de structure selon la revendication 8.

## Patentansprüche

1. Gurtaufrollerhalterung (4) eines hinteren Sicherheitsgurtes eines Kraftfahrzeugs, welcher eine von einem entlang der Längsrichtung (X) des Fahrzeugs lang gestreckten, tiefgezogenen Blech gebildete Platte (5) umfasst, die dafür ausgebildet ist, in diesem Fahrzeug angeordnet zu werden, und einen im Wesentlichen horizontalen mittleren Bereich (51) aufweist, der von einem äußeren seitlichen Falz (52), der dafür vorgesehen ist, vertikal an einem Verkleidungsblech (6) des Karosserieteils über dem Hinterrad der Karosserie dieses Fahrzeugs befestigt zu werden, und einem mit einem hinteren Befestigungsbereich (54) versehenen inneren seitlichen Falz (53), der dafür vorgesehen ist, an einer hinteren seitlichen Säule (7) dieser Karosserie befestigt zu werden, begrenzt wird, wobei der mittlere Bereich (51) Bohrungen (8) zur Befestigung des Gurtaufrollers umfasst, die in einem vorderen Teil der Platte (5) ausgebildet sind, **dadurch gekennzeichnet, dass** die Platte (5) eine Befestigungslasche (9) aufweist, die in einem hinteren Teil des mittleren Bereichs (51) ausgeschnitten und nach unten umgebogen ist, wobei diese Befestigungslasche (9) dazu bestimmt ist, die Befestigung eines Bedienelements für das Umklappen eines Rücksitzes oder einer Rücksitzlehne des Fahrzeugs sicherzustellen.

2. Gurtaufrollerhalterung (4) nach Anspruch 1, **dadurch gekennzeichnet, dass** die Befestigungslasche (9) im Wesentlichen senkrecht zum mittleren Bereich (51) der Platte (5) nach unten umgebogen ist.

3. Gurtaufrollerhalterung (4) nach Anspruch 1 oder 2, **dadurch gekennzeichnet, dass** die Befestigungslasche (9) im mittleren Bereich (51) der Platte (5) entlang einer U-förmigen Schnittlinie (10) ausgeschnitten ist, wobei die Öffnung des "U" zum Inneren der Karosserie gerichtet ist und eine Biegelinie (11) der Befestigungslasche (9) definiert, die dem inneren seitlichen Falz (53) benachbart angeordnet ist.

4. Gurtaufrollerhalterung (4) nach Anspruch 3, **dadurch gekennzeichnet, dass** die U-förmige Schnittlinie (10) und die Biegelinie (11) der Befestigungslasche (9) eine Öffnung (12) mit einer im Wesentlichen rechteckigen Form begrenzen, welche die Durchführung und/oder das Anheften von Leitungsdrähten im Kraftfahrzeug ermöglicht.

5. Gurtaufrollerhalterung (4) nach einem der vorhergehenden Ansprüche, **dadurch gekennzeichnet, dass** der mittlere Bereich (51) eine lokale Eindrückung (81) aufweist, in deren Mitte sich die Bohrungen (8) zur Befestigung des Gurtaufrollers befinden.

6. Gurtaufrollerhalterung (4) nach einem der vorhergehenden Ansprüche, **dadurch gekennzeichnet, dass** der äußere seitliche Falz (52) eine lokale Eindrückung (13) aufweist, die sich, in der Querrichtung (Y) des Fahrzeugs gesehen, gegenüber der Befestigungslasche (9) befindet, so dass ein vergrößerter Durchführungsraum zwischen der Befestigungslasche (9) und dem äußeren seitlichen Falz (52) ausgebildet wird.

7. Gurtaufrollerhalterung (4) nach einem der vorhergehenden Ansprüche, **dadurch gekennzeichnet, dass** sie aus einem tiefgezogenen Blech mit einer Dicke zwischen 1,7 und 2 mm hergestellt ist.

8. Strukturanordnung einer Karosserie eines Kraftfahrzeugs, welche eine Verkleidung (6) des seitlichen Karosserieteils über dem Hinterrad des Fahrzeugs und eine hintere Säule (7), die an eine hintere Kofferraumöffnung (3) des Fahrzeugs angrenzt, umfasst, **dadurch gekennzeichnet, dass** sie eine Gurtaufrollerhalterung (4) nach einem der vorhergehenden Ansprüche umfasst.

9. Kraftfahrzeug, welches eine hintere Reihe von Sitzen, Sicherheitsgurtaufroller, die den Sitzen jeweils zugeordnet sind, und wenigstens ein Bedienelement für das Umklappen eines Rücksitzes oder einer Rücksitzlehne des Fahrzeugs umfasst, **dadurch gekennzeichnet, dass** es eine Strukturanordnung nach Anspruch 8 umfasst.

## Claims

1. Rear seat-belt retractor bracket (4) of a motor vehicle, comprising a tray (5) made from a stamped metal sheet elongated in the longitudinal direction (X) of the vehicle, configured to be arranged in said vehicle, comprising a substantially horizontal central zone (51) delimited by an outer side fold (52) intended to be attached vertically to a rear quarter lining panel (6) of the body of said vehicle, an inner side fold (53) having a rear attachment section (54) intended to be attached to a rear side pillar (7) of said body, the central zone (51) comprising holes (8) for attaching the retractor and formed in a front portion of the tray (5), **characterized in that** the tray (5) comprises an attachment lug (9) cut out of a rear portion of the central zone (51) and folded downward, said attachment lug (9) being intended to ensure the attachment of a control element for folding down a rear seat or seat backrest of the vehicle.

2. Retractor bracket (4) according to Claim 1, **characterized in that** the attachment lug (9) is folded downward substantially perpendicularly to the central zone (51) of the tray (5).

3. Retractor bracket (4) according to Claim 1 or 2, **characterized in that** the attachment lug (9) is cut out of the central zone (51) of the tray (5) following a U-shaped cutting line (10), the opening of the U being directed towards the interior of the body and defining a fold line (11) for the attachment lug (9) arranged adjacent to the inner side fold (53).

4. Retractor bracket (4) according to Claim 3, **characterized in that** the U-shaped cutting line (10) and the fold line (11) of the attachment lug (9) delimit an opening (12) of substantially rectangular form, allowing passage and/or securing of wiring in the motor vehicle.

5. Retractor bracket (4) according to any of the preceding claims, **characterized in that** the central zone (51) comprises a local imprint (81), in the middle of which the holes (8) for attachment of the retractor are located.

6. Retractor bracket (4) according to any of the preceding claims, **characterized in that** the outer side fold (52) comprises a local imprint (13) opposite the attachment lug (9) viewed in the transverse direction (Y) of the vehicle, so as to provide an enlarged passage space between the attachment lug (9) and the outer side fold (52).

7. Retractor bracket (4) according to any of the preceding claims, **characterized in that** it is made from a stamped metal sheet with a thickness between 1.7 and 2 mm.

8. Structural arrangement of a body of a motor vehicle comprising a side rear quarter lining (6) of the vehicle, a rear pillar (7) adjacent to an opening of the rear luggage compartment (3) of the vehicle, **characterized in that** it comprises a retractor bracket (4) according to any of the preceding claims.

9. Motor vehicle comprising a row of rear seats, seat-belt retractors associated respectively with the seats, at least one control element for folding down a rear seat or seat backrest of the vehicle, **characterized in that** it comprises a structural arrangement according to Claim 8.
